# EUROPÄISCHE PATENTANMELDUNG

(11) **EP 1 342 613 A2**
(43) Veröffentlichungstag der Anmeldung: **10.09.2003**
(21) Anmeldenummer: 03002862.5
(22) Anmeldetag: 08.02.2003
(51) Int. Cl.: B60N 2/50

(54) **Sitzkissen mit Verriegelung**

(30) Priorität: 04.03.2002 DE 10209240
(71) Anmelder: DaimlerChrysler AG, 70567 Stuttgart (DE)
(72) Erfinder: Böhmer, Michael, 67806 Rockenhausen (DE); Burr, Michael, 66894 Langwieden (DE); Flory, Gerhard, 71032 Böblingen (DE); Geisel, Thomas, 72108 Rottenburg (DE); Hippel, Daniel, 67722 Winnweiler (DE); Wrobel, Darius, 67657 Kaiserslautern (DE)

(57) **Zusammenfassung**

Die Erfindung betrifft ein Sitzkissen für einen Fahrzeugsitz. Das Sitzkissen ist mittels einer lösbaren Verriegelungsvorrichtung (3), die eine einen Pilzkopf (31) hintergreifende Drahtfeder (33) aufweist, mit einem Rahmen (23) verbunden. Die Drahtfeder (33) weist zweigegenüberliegende Schenkel (40) auf, die an ihrem einen Ende miteinander verbunden und an ihrem anderen Ende offen sind.

Um eine sichere Verbindung zu gewährleisten, weisen die Schenkel (40) der Drahtfeder (33) an ihrem offenen Ende eine Öse (34) auf, die einen an der Kissenschale (22) angeformten Steg (35) hintergreift.

## Beschreibung

Die Erfindung betrifft ein Sitzkissen nach den Merkmalen des Oberbegriffs des Anspruchs 1.

In der Praxis werden solche Sitzkissen vor allem im Fondbereich von Fahrzeugen eingesetzt. Dort ist der Platz beschränkt und meistens ist kein Bauraum vorhanden, um die Sitzkissen mit dem Fahrzeug zu verschrauben. Dennoch soll das Sitzkissen fest verankert und leicht montierbar sein.

Die DE 195 24 174 zeigt ein solches Sitzkissen. Es weist eine Verriegelungsvorrichtung mit einer Drahtfeder auf, die mit einem Rastkopf zusammenwirkt. Bei der Montage verriegelt das Sitzkissen selbsttätig, indem Druck von oben auf das Sitzkissen ausgeübt wird, woraufhin die Drahtfeder von dem Rastkopf gespreizt wird und dann diesen verrastend hintergreift. Nachteilig bei dieser Vorrichtung ist, dass bei Einleitung großer Kräfte die Drahtfeder nachgeben kann und sich aufbiegt. Es besteht dann die Gefahr, dass sie außer Eingriff mit dem Rastkopf kommt und das Sitzkissen freigibt.

Es ist Aufgabe der Erfindung ein Sitzkissen zu schaffen, das einfach montierbar und einfach austauschbar ist, wobei das Sitzkissen sich auch beim Auftreten von großen Kräften nicht unbeabsichtigt löst.

Die Aufgabe wird erfindungsgemäß durch ein Sitzkissen nach den Merkmalen des Anspruchs 1 gelöst.

Das Sitzkissen weist eine Verriegelungsvorrichtung mit einer zweischenkeligen Drahtfeder auf, die einen Pilzkopf hintergreift. Die beiden Schenkel der Drahtfeder sind an einem Ende miteinander verbunden und am anderen Ende offen. Die Drahtfeder kann z. B. aus einem Stück Federdraht, das entsprechend geformt ist, ausgebildet sein. An dem offenen Ende weisen die Schenkel der Drahtfeder jeweils eine Öse auf. Diese Hintergreift bei verriegelter Verriegelungsvorrichtung einen an der Kissenschale angeformten Steg. Die beiden Schenkel der Drahtfeder sind an beiden Enden festgelegt und können sich nicht voneinander wegbewegen. An einem Ende sind die Schenkel miteinander verbunden und an dem anderen Ende sind sie durch die mit der Kissenschale in Eingriff befindliche Öse fixiert. Dadurch befindet sich die Drahtfeder in verriegelter Stellung immer im Eingriff mit dem Pilzkopf. Die Verriegelungsvorrichtung bleibt also auch bei Einleitung großer Kräfte sicher verriegelt.

Um das Sitzkissen einfach austauschen zu können ist vorgesehen, dass die Verriegelungsvorrichtung lösbar ausgebildet ist. Sie weist ein manuelles Betätigungselement auf, das mit der Drahtfeder verbunden ist, insbesondere das verbundene Ende der Drahtfeder haltert. Durch manuelle Betätigung eingeleiteten Druck gibt das Betätigungselement direkt an die Drahtfeder weiter und beaufschlagt diese in Öffnungsrichtung.

Eine Ausführung sieht vor, dass die Feder in etwa U-förmig ausgebildet ist, wobei die Schenkel der Drahtfeder spiegelbildlich zueinander ausgeformt und/oder angeordnet sind. Vorzugsweise weist jeder Schenkel zumindest einen schräg verlaufenden Abschnitt auf, der mit einer schrägen Führungsfläche, vorzugsweise einem Spreizelement, zusammenwirkt. Bei Beaufschlagung der Drahtfeder in Öffnungsrichtung bewegt sich diese linear entlang der schrägen Führungsfläche, wird aufgrund der schräg ausgeformten Schenkelabschnitte gespreizt und kommt außer Eingriff mit dem Pizkopf.

Eine vorteilhafte Ausführung sieht vor, dass die Drahtfeder eine die beiden Schenkel aufeinander zu bewegende Federspannung aufweist. Durch Zusammenwirken der schrägen Abschnitte der Federschenkel und der Spreizkeile beaufschlagt die Federspannung die Drahtfeder in Schließrichtung, so dass sich die Verriegelungsvorrichtung selbsttätig verriegelt.

Eine weitere vorteilhafte Ausführung sieht vor, dass der von der Öse hintergreifende Steg als Spreizkeil ausgebildet ist. Der Steg kann auf einer Seite eine Tasche und/oder eine Nut aufweisen, in die die Öse eingreift. Die andere Seite des Stegs kann als schräge Fläche ausgebildet sein, die in Anlage mit einem schrägen Abschnitt des Schenkels der Drahtfeder ist und diesen führt.

Um eine leichte Betätigung der Verriegelungsvorrichtung einerseits und einen sicheren Halt des Sitzkissens andererseits zu gewährleisten, ist vorgesehen, dass jeweils ein Schenkel der Drahtfeder zumindest zwei schräge Abschnitte aufweist. Ein erster schräger Abschnitt ist vor dem Pilzkopf und ein zweiter nach dem Pilzkopf angeordnet, um die Drahtfeder zu beiden Seiten des Pilzkopfes zu fixieren. Die schrägen Abschnitte können so ausgebildet sein, dass sie zumindest teilweise die Drahtfeder umgreifen und diese somit führen und haltern.

Eine Verwendung des erfindungsgemäßen Sitzkissens ist bei Sitzbänken und Einzelsitzen im Fond eines Fahrzeugs und/oder bei Einzelsitzen z.B. in Omnibussen oder Schienefahrzeugen oder Luftfahrzeugen vorgesehen.

Weitere Merkmale und Ausführungsformen der Erfindung ergeben sich aus den Ansprüchen, den Figuren und der Figurenbeschreibung. Die vorstehend genannten und nachfolgend aufgeführten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

In den Figuren sind weitere Ausführungen der Erfindung dargestellt und erläutert, dabei zeigen:
- **Figur 1:**: Einen Fahrzeugsitz mit Lehne und Sitzkissen,
- **Figur 2:**: eine Darstellung des Sitzkissenrahmens ohne Sitzpolster,
- **Figur 3:**: eine Darstellung der verriegelten Verriegelungsvorrichtung,
- **Figur 4:**: einen Schnitt entlang der Linie A-A in Figur 3,
- **Figur 5:**: eine Darstellung der entriegelten Verriegelungsvorrichtung,
- **Figur 6:**: einen Schnitt entlang der Linie B-B in Figur 5.

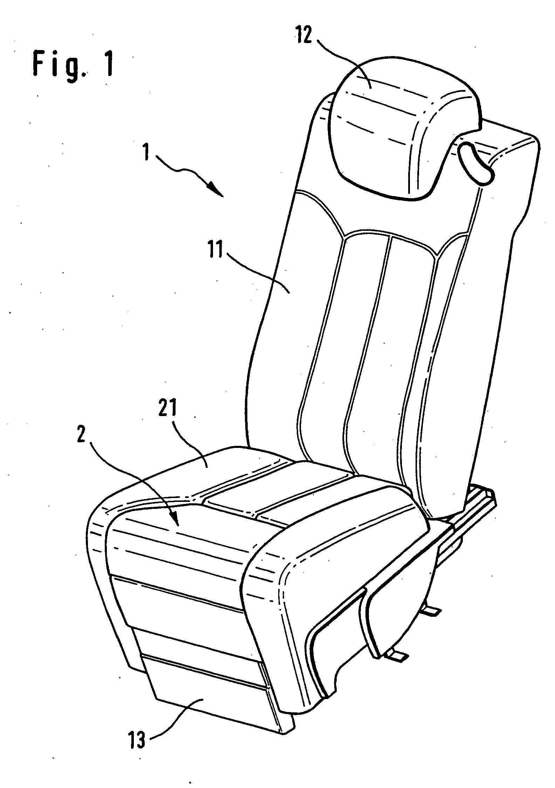

**Figur 1** zeigt einen Fahrzeugsitz 1 wie er z. B. im Fond eines Fahrzeugs verwendet ist. Der Fahrzeugsitz 1 weist eine Rückenlehne 11 mit einer Kopfstütze 12 sowie ein Sitzkissen 2 auf. Für eine komfortable Sitzmöglichkeit weist der Fahrzeugsitz auch eine Fußstütze 13 auf. Zudem ist der Fahrzeugsitz 1 über Schienen im Fahrzeug längsverschiebbar gelagert. Die Rückenlehne 11 ist schwenkbar ausgebildet, so dass der Sitz viele mögliche Sitzvarianten aufweist, insbesondere von einer aufrechten Sitzposition in eine zurückgeneigte Ruheposition verbracht werden kann.

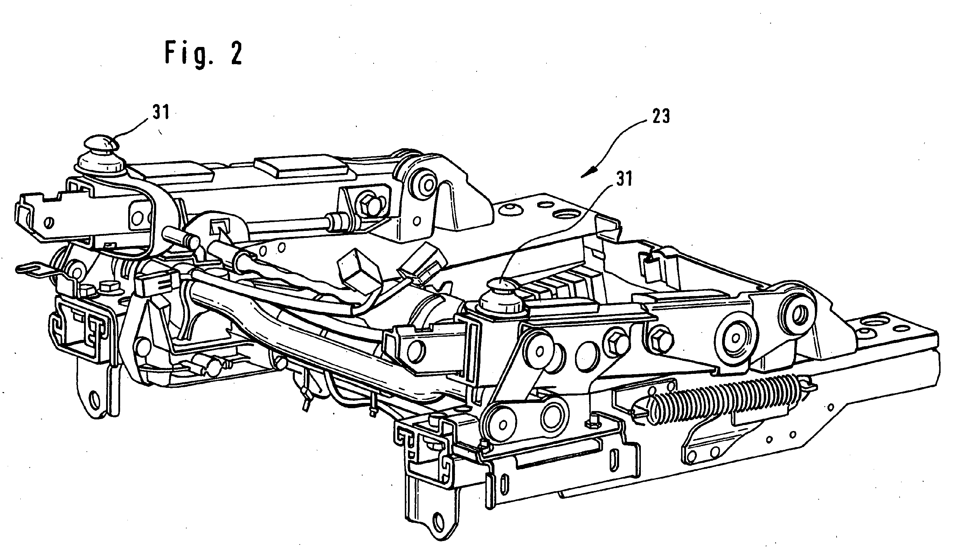

Das Sitzkissen 2 weist eine Kissenschale 22 auf, die ein Sitzpolster 21 trägt. Über die Kissenschale 22 ist das Sitzkissen mit einem Rahmen 23 verbunden, der in **Figur 2** dargestellt ist. Der Rahmen 23 trägt das Sitzkissen und weist Verstellelemente zum Einstellen der Sitzposition auf.

Eine Verriegelungsvorrichtung 3 hält das Sitzkissen 2 auf dem Rahmen 23. Das Sitzkissen 2 wird bei der Montage mit einer im hinteren Bereich des Sitzkissens 2 angeordneten Gabel auf einen feststehenden Bolzen 41 geschoben und dann nach unten gedrückt oder verschwenkt, wobei die Verriegelungsvorrichtung 3 verrastet und das Sitzkissen 2 hält.

Das Sitzkissen 2 weist zwei Verriegelungsvorrichtungen 3 auf, wobei auf jeder Seite des Sitzkissens 2 eine Verriegelungsvorrichtung angeordnet ist, so dass das Sitzkissen 2 sicher mit dem Rahmen 23 verbunden ist.

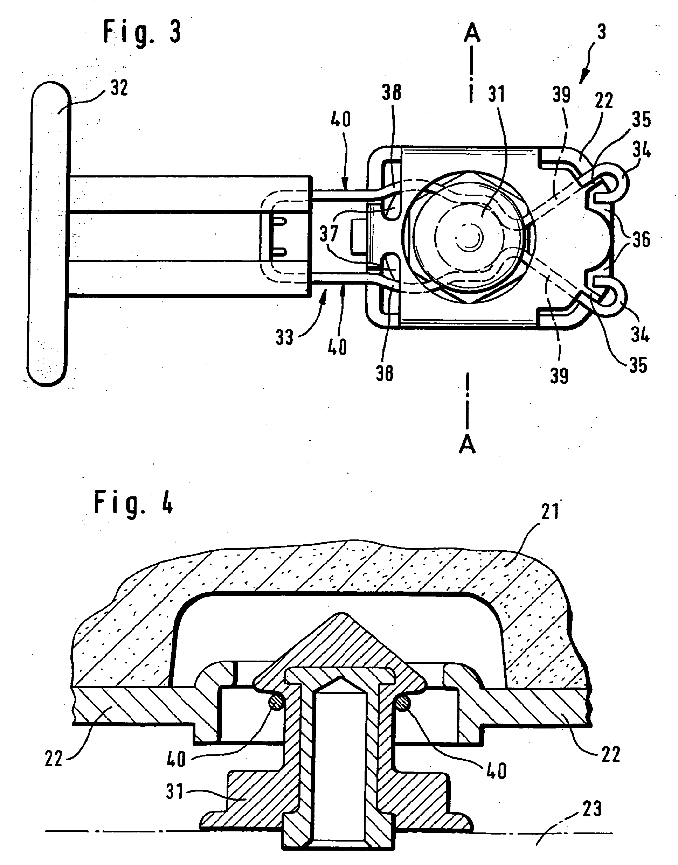

Die **Figur 3** zeigt die Verriegelungsvorrichtung 3 in verrasteter bzw. Verriegelter Position. In der **Figur 4** ist ein Schnitt entlang der Linie A-A dargestellt.

Die Verriegelungsvorrichtung 3 weist einen Pilzkopf 31 auf, der fest mit dem Rahmen 23 verbunden ist. Der Pilzkopf weist ein Spitz zulaufendes Oberteil auf, welches hinterschnitten ist und in einen sich nach unten verbreiternden Fußteil übergeht. Der breite Fußteil ist kraftschlüssig mit dem Rahmen 23 verbunden. Der Pilzkopf 31 wirkt mit einer Drahtfeder 33 zusammen, die mit der Kissenschale 22 verbunden ist. Oberhalb der Kissenschale ist das Sitzpolster 21 angeordnet. Die Kissenschale 22 ist als Formteil aus Aluminium, Stahl oder Kunststoff ausgebildet und weist Führungen auf, die die Drahtfeder 33 verschiebbar lagern.

Die Drahtfeder 33 ist aus einem Stück Federdraht gebogen und weist in etwa U-Form auf. Zwei parallel verlaufende Schenkel 40 der Drahtfeder 33 sind an einem Ende miteinander verbunden und an dem anderen Ende offen. In Verriegelter Stellung ist die Drahtfeder 33 in Eingriff mit dem Pilzkopf 31. Die beiden Schenkel 40 hintergreifen den Pilzkopf dabei diametral. Die Drahtfeder 33 weist eine Federvorspannung auf, die die Schenkel 40 aufeinander zu beaufschlagt und so das Hintergreifen des Pilzkopfes 31 sicherstellt. Das verbundene Ende der Drahtfeder 33 greift in ein Betätigungselement 32 ein und ist dort befestigt, z. B. verklebt oder vergossen oder verschweißt.

Das Betätigungselement 32 ist an der Kissenschale 22 geführt und weist eine von außerhalb des Sitzkissens 2 zugängliche Druckfläche auf. Zum Lösen der Verriegelungsvorrichtung 3 kann manuell auf das Betätigungselement 32 Druck ausgeübt werden, woraufhin dieses die Drahtfeder 33 in Öffnungsrichtung beaufschlagt.

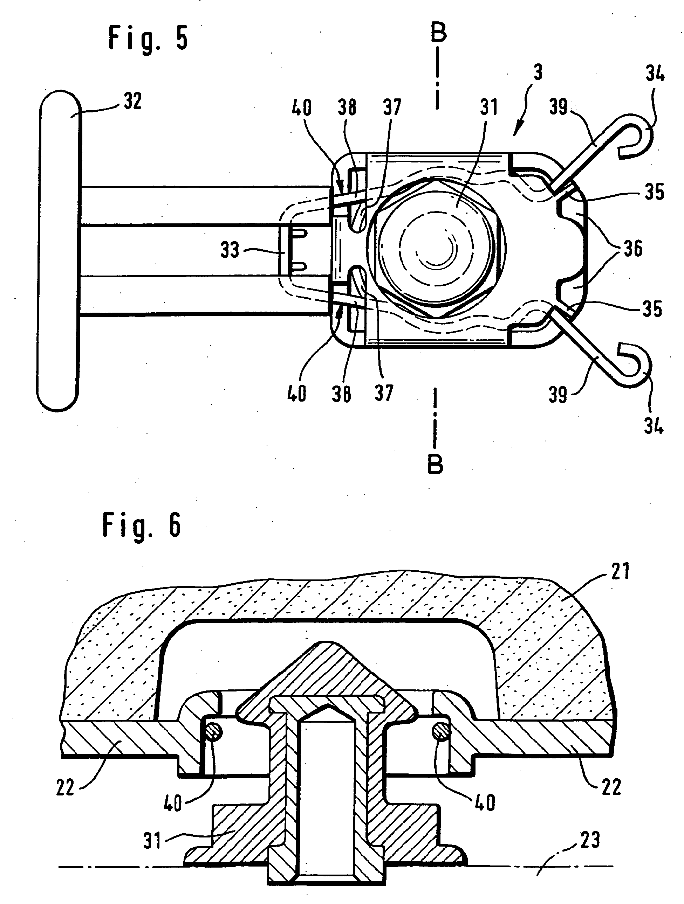

Die entriegelte Verriegelungsvorrichtung mit gespreizter, sich außer Eingriff mit dem Pilzkopf befindlicher Drahtfeder ist in der **Figur 5** und in der **Figur 6** dargestellt. Jeder Schenkel 40 der Draht feder 33 weist einen schräg ausgeformten Abschnitt 39 auf. Er wirkt mit dem Spreizelement 35 zusammen, so dass der Schenkel 40 bei der Bewegung der Drahtfeder 33 in Öffnungsrichtung gespreizt wird. Die Kissenschale 22 weist mit dem Betätigungselement 32 zusammenwirkende Anschläge auf, die die Öffnungsbewegung begrenzen, wenn die Verriegelungsvorrichtung 3 entriegelt ist. Bei entriegelter Verriegelungsvorrichtung 3 kann das Sitzkissen 2 einfach nach oben weggeklappt und/oder entnommen werden.

Die Federspannung der Drahtfeder 33 beaufschlagt die Schenkel 40 aufeinander zu. Demzufolge stützen sich der schräge Abschnitte des Schenkels 40 an dem Spreizelement 35 ab und treibt die Drahtfeder 33 in Richtung Verriegelt. Nach Loslassen des Betätigungselementes 32 verriegelt sich demzufolge die Verriegelungsvorrichtung 3 selbsttätig.

Die Schenkel 40 der Drahtfeder 33 weisen an ihrem freien Ende jeweils eine Öse 34 auf, die bei verriegelter Verriegelungsvorrichtung 3 die Kissenschale 22 bzw. einen Steg 35 der Kissenschale 22 hintergreift. Die Öse 34 greift in eine an der Kissenschale ausgeformte Tasche 36 ein und verhindert so, dass sich die Schenkel 40 an dem freien Ende der Drahtfeder 33 ungewollt aufspreizen. Die Schenkel 40 der Drahtfeder 33 sind so an beiden Enden fest gehaltert. Die Verriegelungsvorrichtung 3 ist demzufolge nur durch betätigen des Betätigungselementes 32 lösbar.

## Patentansprüche

1. Sitzkissen für ein Fahrzeugsitz mit einem eine Kissenschale mit einem Sitzpolster tragenden Rahmen, der mit der Kissenschale über eine lösbare Verriegelungsvorrichtung verbunden ist,
wobei die Verriegelungsvorrichtung einen fest mit dem Rahmen verbundenen Pilzkopf und eine mit der Kissenschale verbundene Drahtfeder umfasst, wobei die Drahtfeder zwei gegenüberliegende Schenkel, die einerends miteinander verbunden und andernends offen sind, aufweist
und die Schenkel der Drahtfeder den Pilzkopf bei verriegelter Verriegelungsvorrichtung hintergreifen,
**dadurch gekennzeichnet,**
**dass** beide Schenkel (40) der Drahtfeder (33) an ihrem offenen Ende eine Öse (34) aufweisen, die bei verriegelter Verriegelungsvorrichtung (3) einen an der Kissenschale (22) angeformten Steg (35) hintergreifen.

2. Sitzkissen nach Anspruch 1,
**dadurch gekennzeichnet,**
**dass** die Verriegelungsvorrichtung (3) ein manuelles Betätigungselement (32) zum Lösen der Verriegelungsvorrichtung (3) aufweist und die beiden Schenkel (40) der Drahtfeder (33) mit ihrem verbundenen Ende in das Betätigungselement (32) eingreifen und dort befestigt sind.

3. Sitzkissen nach Anspruch 1 oder 2,
**dadurch gekennzeichnet,**
**dass** die beiden Schenkel (40) der Drahtfeder (33) spiegelbildlich zueinander ausgebildet sind.

4. Sitzkissen nach Anspruch 3,
**dadurch gekennzeichnet,**
**dass** ein Schenkel (40) zwei gleichgerichtete schräg verlaufende Abschnitte (38, 39) aufweist, wobei bei verriegelter Verriegelungsvorrichtung (3) ein erster Abschnitt (38) vor dem Pilzkopf (31) und ein zweiter Abschnitt (39) nach dem Pilzkopf (31) angeordnet ist.

5. Sitzkissen nach Anspruch 4,
**dadurch gekennzeichnet,**
**dass** ein schräg verlaufender Abschnitt (38 ) mit einem an der Kissenschale (22) angeformten Spreizelement (35,) zusammenwirkt, vorzugsweise in Anlage ist.

6. Sitzkissen nach Anspruch 5,
**dadurch gekennzeichnet,**
**dass** bei Druck auf das Betätigungselement (32) dieses die Drahtfeder (33) linear entlang des Spreizelementes (35) bewegt und infolge des Zusammenwirkens von Spreizelement (35) und schräg verlaufendem Abschnitt (38) der Schenkel (40) die Drahtfeder (33) spreizt und so außer Eingriff mit dem Pilzkopf (31) bringt.

7. Sitzkissen nach einem der Ansprüche 1 bis 6,
**dadurch gekennzeichnet,**
**dass** der Steg (35) als Spreizelement ausgebildet ist, indem er auf einer Seite mit der Öse (34) zusammenwirkt und auf der anderen Seite eine den Schenkel (40) der Drahtfeder (33) führende schräge Anlagefläche aufweist.

8. Sitzkissen nach einem der Ansprüche 1 bis 7,
**dadurch gekennzeichnet,**
**dass** die Verriegelungsvorrichtung (3) selbstverriegelnd ausgebildet ist, indem die Federspannung der Drahtfeder (33) die beiden Schenkel aufeinander zu weisend beaufschlagt und die Drahtfeder (33) durch das Zusammenwirken von Spreizelement (35, 37) und schräg verlaufendem Abschnitt den Schenkel (40) in Verriegelungsstellung treibt.
